# EUROPÄISCHE PATENTSCHRIFT

(11) **EP 2 215 128 B1**
(45) Veröffentlichungstag und Bekanntmachung des Hinweises auf die Patenterteilung: **18.01.2012**
(21) Anmeldenummer: 08854835.9
(22) Anmeldetag: 24.11.2008
(51) Int. Cl.: C08F 2/48, B01J 19/22, B01J 19/12

(54) **VERFAHREN ZUR KONTINUIERLICHEN HERSTELLUNG WASSERABSORBIERENDER POLYMERPARTIKEL**
METHOD FOR THE CONTINUOUS PRODUCTION OF WATER-ABSORBENT POLYMER PARTICLES
PROCÉDÉ DE PRODUCTION CONTINUE DE PARTICULES DE POLYMÈRE ABSORBANT L'EAU

(30) Priorität: 26.11.2007 US 990045 P
(43) Veröffentlichungstag der Anmeldung: 11.08.2010
(73) Patentinhaber: BASF SE, 67056 Ludwigshafen (DE)
(72) Erfinder: WEISMANTEL, Matthias, 63637 Jossgrund (DE); FUNK, Rüdiger, 65527 Niedernhausen (DE); BLAIR, Leigh R., Greenwood Springs MS 38848 (US); HEITZHAUS, Kevin D., Suffolk VA 23435 (US)
(86) Internationale Anmeldenummer: PCT/EP2008/066046
(87) Internationale Veröffentlichungsnummer: WO 2009/068490

(56) Entgegenhaltungen:
- EP-A- 0 197 423
- WO-A-02/066520
- US-A- 4 181 752

## Beschreibung

Die vorliegende Erfindung betrifft ein Verfahren zur Herstellung wasserabsorbierender Polymerpartikel durch strahlungsinduzierte Polymerisation auf einem kontinuierlich umlaufenden Band, wobei elektromagnetische Strahlung mit einer Wellenlänge von mehr als 400 nm abgeschirmt wird.

Wasserabsorbierende Polymere werden zur Herstellung von Windeln, Tampons, Damenbinden und anderen Hygieneartikeln, aber auch als wasserzurückhaltende Mittel im landwirtschaftlichen Gartenbau verwendet.

Gemäß der Monographie "Modem Superabsorbent Polymer Technology", F.L. Buchholz und A.T. Graham, Wiley-VCH, 1998, Seiten 77 bis 84, werden wasserabsorbierende Polymere üblicherweise in kontinuierlichen Knetreaktoren oder auf kontinuierlich umlaufenden Bändern hergestellt.

EP 1 097 946 A2 und EP 1 589 040 A1 beschreiben Verfahren zur Polymerisation auf kontinuierlich umlaufenden Bändern. Gemäß EP 1 097 946 A2 wird der vordere Bereich des Bandes gekühlt. EP 1 589 040 A1 offenbart eine strahlungsinduzierte Polymerisation.

Aufgabe der vorliegenden Erfindung war die Bereitstellung eines verbesserten Verfahrens zur Herstellung wasserabsorbierender Polymerpartikel, insbesondere eines wenig störanfälligen Verfahrens sowie eines Verfahrens zur Herstellung qualitativ hochwertiger wasserabsorbierender Polymerpartikel.

Gelöst wurde die Aufgabe durch ein Verfahren zur Herstellung wasserabsorbierender Polymerpartikel durch strahlungsinduzierte Polymerisation einer Monomerlösung oder -suspension auf einem kontinuierlich umlaufenden Band, dadurch gekennzeichnet, dass sich zwischen der Strahlenquelle und der Monomerlösung oder -suspension eine Abschirmung für elektromagnetische Strahlung mit einer Wellenlänge von mehr als 400 nm befindet, die Abschirmung eine Dicke von mindestens 1 mm aufweist und Beschädigungen der Abschirmung mittels eines Mikrowellendetektors ermittelt werden.

Vorteilhaft wird elektromagnetische Strahlung mit einer Wellenlänge von 1 mm bis 1 m (Mikrowellen) abgeschirmt. Abschirmen bedeutet, dass die auf die Abschirmung auf treffende Strahlung nicht oder nur teilweise durch diese hindurch tritt.

Die Art der Abschirmung unterliegt keiner Beschränkung, allerdings sollte die Abschirmung eine ausreichende Durchlässigkeit für elektromagnetische Strahlung mit einer Wellenlänge von 100 bis 350 nm (UV-Strahlung) aufweisen. Bevorzugtes Abschirmmaterial ist Quarzglas.

Die Dicke der Abschirmung beträgt vorzugsweise von 1 bis 20 mm, besonders bevorzugt 2 bis 10 mm, ganz besonders bevorzugt 2,5 bis 7,5 mm.

Unterhalb der Strahlenquellen können beispielsweise Quarzglasscheiben entsprechender Stärke als Abschirmung angebracht werden.

Der vorliegenden Erfindung liegt die Erkenntnis zu Grunde, dass die üblicherweise bei der strahlungsinduzierten Polymerisation eingesetzten UV-Strahler einen beträchtlichen Anteil an langwelliger elektromagnetischer Strahlung abgeben. Diese Strahlung kann zu unkontrolliertem Aufheizen der Monomerlösung oder -suspension führen. Durch eine geeignete Abschirmung kann dieser unerwünschte Strahlungsanteil deutlich reduziert werden. Dadurch werden Überhitzungen vermieden und es werden wasserabsorbierende Polymerpartikel mit verbesserter Produktqualität erhalten.

Ein weitere Vorteil der erfindungsgemäßen Abschirmung ist, dass der Abstand zwischen Strahlenquelle und Monomerlösung oder -suspension verringert werden kann, ohne dass Anteile der Monomerlösung oder -suspension an die Strahlenquelle spritzen und so die Lebensdauer der Strahlenquelle vermindern.

Der Abstand zwischen Strahlenquelle und Abschirmung beträgt vorzugsweise von 1 bis 50 cm, besonders bevorzugt von 5 bis 30 cm, ganz besonders bevorzugt von 10 bis 20 cm.

Der Abstand zwischen Monomerlösung oder -suspension und Abschirmung beträgt vorzugsweise von 30 bis 130 cm, besonders bevorzugt von 60 bis 110 cm, ganz besonders bevorzugt von 70 bis 100 cm.

Der Abstand zwischen Strahlenquelle und Monomerlösung oder -suspension beträgt vorzugsweise von 40 bis 150 cm, besonders bevorzugt von 70 bis 130 cm, ganz besonders bevorzugt von 80 bis 120 cm.

Vorteilhaft wird der Bereich zwischen Strahlenquelle und Abschirmung gekühlt. Hierzu ist insbesondere ein Luftstrom geeignet.

Die Abschirmung wird üblicherweise so gewählt, dass vorzugsweise weniger als 50%, der Mikrowellen durch die Abschirmung hindurch treten.

Zur Überwachung der Abschirmung werden Mikrowellendetektoren eingesetzt Beschädigungen der Abschirmung, beispielsweise Brüche von Quarzglasscheiben, können so sofort detektiert werden.

Im efindungsgemäßen Verfahren können beispielsweise Monomerlösungen oder - suspensionen, enthaltend
a) mindestens ein ethylenisch ungesättigtes, säuregruppentragendes Monomer, das zumindest teilweise neutralisiert sein kann,
b) mindestens einen Vernetzer,
c) optional ein oder mehrere mit den unter a) genannten Monomeren copolymerisierbare ethylenisch und/oder allylisch ungesättigte Monomere und
d) optional ein oder mehrere wasserlösliche Polymere,
eingesetzt werden.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 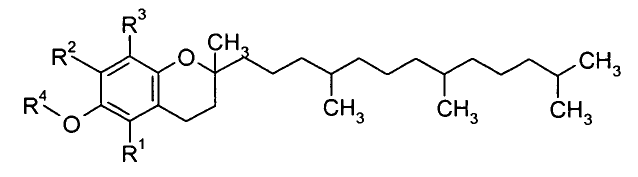 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylammoniumchlorid, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 100 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a).

Mit den ethylenisch ungesättigten, säuregruppentragenden Monomeren a) copolymerisierbare ethylenisch ungesättigte Monomere c) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Geeignete Photoinitiatoren sind beispielsweise sogenannte α-Spalter, H-abstrahierende Systeme oder auch Azide. Beispiele für solche Initiatoren sind Benzophenon-Derivate wie Michlers-Keton, Phenanthren-Derivate, Fluoren-Derivate, Anthrachinon-Derivate, Thioxanton-Derivate, Cumarin-Derivate, Benzoinether und deren Derivate, Azoverbindungen, wie die oben genannten Radikalbildner, substituierte Hexaarylbisimidazole oder Acylphosphinoxide, insbesondere 2-Hydroxy-2-methylpropiophenon (Darocure® 1173). Beispiele für Azide sind 2-(N,N-Dimethylamino)-ethyl-4-azidocinnamat, 2-(N,N-Dimethyl-amino)-ethyl-4-azidonaphthylketon, 2-(N,N-Dimethytamino)-ethyl-4-azidobenzoat, 5-Azido-1-naphthyl-2`-(N,N-dimethylamino)ethylsulfon, N-(4-Sulfonylazidophenyl)maleinimid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclohexanon und 2,6-Bis-(p-azidobenzyliden)-4-methylcyclohexanon.

Bei der Polymerisation auf einem kontinuierlich umlaufenden Band entsteht ein Polymergel, das in einem weiteren Verfahrensschritt üblicherweise zerkleinert wird, beispielsweise in einem Fleischwolf, Extruder oder Kneter.

Die Säuregruppen der erhaltenen Polymergele sind üblicherweise teilweise neutralisiert, vorzugsweise zu 25 bis 95 mol-%, bevorzugt zu 50 bis 80 mol-%, besonders bevorzugt zu 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen.

Die Neutralisation wird vorzugsweise auf der Stufe der Monomeren durchgeführt. Dies geschieht üblicherweise durch Einmischung des Neutralisationsmittels als wässrige Lösung, als Schmelze, oder bevorzugt auch als Feststoff. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Es ist aber auch möglich die Neutralisation nach der Polymerisation auf der Stufe des Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das Polymergel wird dann vorzugsweise mit einem Bandtrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. WSP 230.2-05 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß um so einfacher und das Produkt umso weißer, wenn der Feststoffgehalt des Gels möglichst hoch ist. Bevorzugt liegt der Feststoffgehalt des Gels vor der Trocknung daher zwischen 25 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern.

Das getrocknete Polymergel wird hiernach üblicherweise gemahlen und klassiert, wobei zur Mahlung vorzugsweise ein- oder mehrstufige Walzenstühle, bevorzugt zwei-oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA (European Disposables and Nonwovens Association) empfohlenen Testmethode Nr. WSP 220.2-05 "Partikel size distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Die Polymerpartikel können zur weiteren Verbesserung der Eigenschaften nachvernetzt werden. Geeignete Nachvernetzer sind Verbindungen, die mindestens zwei Gruppen enthalten, die mit den Carboxylatgruppen des Polymergels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Weiterhin können auch Nachvernetzer eingesetzt werden, die zusätzliche polymerisierbare ethylenisch ungesättigte Gruppen enthalten, wie in DE 37 13 601 A1 beschrieben

Die Menge an Nachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf das Polymer.

In einer bevorzugten Ausführungsform der vorliegenden Erfindung werden zusätzlich zu den Nachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf das Polymer.

Die Nachvernetzung wird üblicherweise so durchgeführt, dass eine Lösung des Nachvernetzers auf das Polymergel oder die trockenen Polymerpartikel aufgesprüht wird. Im Anschluss an das Aufsprühen werden die mit der Nachvernetzer beschichteten Polymerpartikel thermisch getrocknet, wobei die Nachvernetzungsreaktion sowohl vor als auch während der Trocknung stattfinden kann.

Das Aufsprühen einer Lösung des Nachvernetzers wird vorzugsweise in Mischern mit bewegten Mischwerkzeugen, wie Schneckenmischer, Scheibenmischer, Pflugscharmischer und Schaufelmischer, durchgeführt werden. Besonders bevorzugt sind Horizontalmischer, wie Pflugscharmischer und Schaufelmischer, ganz besonders bevorzugt sind Vertikalmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, und besonders bevorzugt 130 bis 210°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Anschließend kann das nachvernetzte Polymer erneut klassiert werden.

Die nachvernetzten Polymerpartikel können zur weiteren Verbesserung der Eigenschaften beschichtet oder nachbefeuchtet werden. Geeignete Beschichtungen zur Verbesserung des Akquisitionsverhaltens sowie der Permeabilität (SFC) sind beispielsweise anorganische inerte Substanzen, organische Polymere, kationische Polymere sowie zwei- oder mehrwertige Metallkationen. Geeignete Beschichtungen zur Staubbindung sind beispielsweise Polyole.

## Patentansprüche

1. Verfahren zur Herstellung wasserabsorbierender Polymerpartikel durch strahlungsinduzierte Polymerisation einer Monomerlösung oder -suspension auf einem kontinuierlich umlaufenden Band, **dadurch gekennzeichnet, dass** sich zwischen der Strahlenquelle und der Monomerlösung oder-suspension eine Abschirmung für elektromagnetische Strahlung mit einer Wellenlänge von mehr als 400 nm befindet, die Abschirmung eine Dicke von mindestens 1 mm aufweist und Beschädigungen der Abschirmung mittels eines Mikrowellendetektors ermittelt werden.

2. Verfahren gemäß Anspruch 1, **dadurch gekennzeichnet, dass** sich zwischen der Strahlenquelle und der Monomerlösung oder -suspension eine Abschirmung für elektromagnetische Strahlung mit einer Wellenlänge von 1 mm bis 1 m befindet.

3. Verfahren gemäß Anspruch 1 oder 2, **dadurch gekennzeichnet, dass** die Abschirmung aus Quarzglas ist.

4. Verfahren gemäß einem der Ansprüche 1 bis 3, **dadurch gekennzeichnet, dass** der Abstand zwischen Strahlenquelle und Abschirmung mindestens 1 cm beträgt.

5. Verfahren gemäß einem der Ansprüche 1 bis 4, **dadurch gekennzeichnet, dass** der Abstand zwischen Monomerlösung oder-suspension und Abschirmung mindestens 30 cm beträgt.

6. Verfahren gemäß einem der Ansprüche 1 bis 5, **dadurch gekennzeichnet, dass** der Abstand zwischen Strahlenquelle und Monomerlösung oder -suspension weniger als 2 m beträgt.

7. Verfahren gemäß einem der Ansprüche 1 bis 6, **dadurch gekennzeichnet, dass** der Bereich zwischen Strahlenquelle und Abschirmung gekühlt wird.

8. Verfahren gemäß einem der Ansprüche 1 bis 7, **dadurch gekennzeichnet, dass** der Bereich zwischen Strahlenquelle und Abschirmung mit Luft gekühlt wird.

9. Verfahren gemäß einem der Ansprüche 1 bis 8, **dadurch gekennzeichnet, dass** weniger als 50% der Strahlen mit einer Wellenlänge von 1 mm bis 1 m durch die Abschirmung hindurchtreten.

## Claims

1. A process for producing water-absorbing polymer particles by radiation-induced polymerization of a monomer solution or suspension on a continuous belt, wherein a screen for electromagnetic radiation with a wavelength of more than 400 nm is disposed between the radiation source and the monomer solution or suspension, the screen has a thickness of at least 1 mm and damage to the screen is determined by means of a microwave detector.

2. The process according to claim 1, wherein a screen for electromagnetic radiation with a wavelength of from 1 mm to 1 m is disposed between the radiation source and the monomer solution or suspension.

3. The process according to claim 1 or 2, wherein the screen is made of quartz glass.

4. The process according to any of claims 1 to 3, wherein the distance between radiation source and screen is at least 1 cm.

5. The process according to any of claims 1 to 4, wherein the distance between monomer solution or suspension and screen is at least 30 cm.

6. The process according to any of claims 1 to 5, wherein the distance between radiation source and monomer solution or suspension is less than 2 m.

7. The process according to any of claims 1 to 6, wherein the region between radiation source and screen is cooled.

8. The process according to any of claims 1 to 7, wherein the region between radiation source and screen is cooled with air.

9. The process according to any of claims 1 to 8, wherein less than 50% of the rays with a wavelength of from 1 mm to 1 m pass through the screen.

## Revendications

1. Procédé pour la production de particules de polymère absorbant l'eau, par polymérisation induite par irradiation d'une solution ou suspension de monomères sur une bande avançant en continu, **caractérisé en ce qu'**entre la source de rayonnement et la solution ou suspension de monomères se troupe un blindage pour rayonnement électromagnétique ayant une longueur d'onde de plus, de 400 nm, le blindage présente une épaisseur d'au moins 1 mm et les endommagements du blindage sont déterminés au moyen d'un détecteur à micro-ondes.

2. Procédé selon la revendication 1, **caractérisé en ce qu'**entre la source de rayonnement et la solution ou suspension de monomères se trouvé un blindage pour rayonnement électromagnétique ayant une longueur d'onde de 1 mm à 1 m.

3. Procédé selon la revendication 1 ou z-, **caractérisé en ce que** le blindage est en verre de quartz.

4. Procédé selon l'une quelconque des revendications 1 à 3, **caractérisé en ce que** la distance entre source de rayonnement et blindage est d'au moins 1 cm.

5. Procédé selon l'une quelconque des revendications 1 à 4, **caractérisé en ce que** la distance entre solution ou suspension de monomères et blindage est d'au moins 30 cm.

6. Procédé selon l'une quelconque des revendications 1 à 5, **caractérisé en ce que** la distance entre source de rayonnement et solution ou suspension de monomères est inférieure à 2 m.

7. Procédé selon l'une quelconque des revendications 1 à 6, **caractérisé en ce que** la zone entre source de rayonnement et blindage est refroidie.

8. Procédé selon l'une quelconque des revendications 1 à 7, **caractérisé en ce que** la zone entre source de rayonnement et blindage est refroidie à l'air.

9. Procédé selon l'une quelconque des revendications 1 à 8, **caractérisé en ce que** moins de 50 % du rayonnement ayant une longueur d'onde de 1 mm à 1 m passent à travers le blindage.
